# EUROPÄISCHE PATENTSCHRIFT

(11) **EP 4 595 174 B1**
(45) Veröffentlichungstag und Bekanntmachung des Hinweises auf die Patenterteilung: **01.07.2026**
(21) Anmeldenummer: 23782844.7
(22) Anmeldetag: 27.09.2023
(51) Int. Cl.: H02G 3/00, E04B 5/48, H02G 3/38

(54) **BODENSTÜTZE EINES KABELTRAGSYSTEMS**
SUPPORT DEVICE OF A CABLE CARRYING SYSTEM
SUPPORT PLANCHER D'UN SYSTÈME DE SUPPORT DE CÂBLE

(30) Priorität: 28.09.2022 DE 202022105479 U
(43) Veröffentlichungstag der Anmeldung: 06.08.2025
(73) Patentinhaber: OBO Bettermann Hungary Kft., 2347 Bugyi (HU)
(72) Erfinder: KUTSCHELIS, Kevin, 58675 Hemer (DE); HINZ, Robin, 58730 Fröndenberg (DE); GUTT, Wolfgang, 58708 Menden (DE)
(74) Vertreter: Haverkamp Patentanwälte PartG mbB
(86) Internationale Anmeldenummer: PCT/EP2023/076750
(87) Internationale Veröffentlichungsnummer: WO 2024/068756

(56) Entgegenhaltungen:
- EP-A1- 3 567 686
- EP-B1- 1 212 496
- BE-A- 647 476
- DE-A1- 102018 107 020
- DE-T2- 69 600 575
- JP-U- S61 204 015
- US-A- 2 912 197
- US-A- 3 963 205
- US-A1- 2009 090 549
- US-A1- 2014 360 114
- LEGRAND A: "CATALOG 2016 2017 CABLOFIL Cable Management PW Ladder Tray TROUGH TRAYS Fiber Trough & V-Trough FASTENERS J-Hooks, FAS Power Brackets & CabloPort", 1 January 2016 (2016-01-01), pages 1 - 288, XP055930846, Retrieved from the Internet <URL:http://contactfd.com/wp-content/uploads/Catalog-Cablofil-2016-2017.pdf> [retrieved on 20220614]

## Beschreibung

Die Erfindung betrifft eine Bodenstütze eines Kabeltragsystems.

Kabeltragsysteme dienen dem Tragen von Kabeln und/oder Leitungen, typischerweise in einem Gebäude, etwa einer Fabrikhalle. Zum Tragen von Kabeln und Leitungen verfügt das Kabeltragsystem über Fixpunkte, an denen Kabel und/oder Leitungen angeschlossen bzw. gehalten werden können. Auch können Kabelträger, etwa Kabelkanäle, zur Verfügung gestellt sein.

In einigen Fällen werden Kabeltragsysteme bodenseitig montiert, etwa dem Hallenboden, einem Teil einer abgehängten Decke oder einem Träger. Ist das Kabeltragsystem auf einem Hallenboden installiert, ist ein solches Kabeltragsystem üblicherweise begehbar ausgestaltet, mithin ist dieses so stabil ausgelegt, dass ein Mensch hierauf problemlos stehen und laufen kann, ohne dass das Kabeltragsystem oder gar daran getragene Leitungen oder Kabel beschädigt werden.

Ein bodenseitig montiertes Kabeltragsystem ist etwa in US 2009/0090549 A1 offenbart.

Ein Hängesystem, welches grundsätzlich auch als Bodenstützensystem eingesetzt werden kann, offenbart EP 3 567 686 A1. An einem Kopfteil werden U-Profile eingesetzt, die als Stützschafft Leitungen, etc. tragen können.

Teil eines bodenseitig montierten Kabeltragsystemen sind Bodenstützen. Diese stützen in wiederkehrendem Abstand mittels eines gegenüber dem Boden abgestützten Schafts eine oberseitige Verschlusslänge ab. Durch die Verschlusslänge ist ein Installationsraum zum Verlegen von Kabeln und/oder Leitungen, auch Versorgungsleitungen, oberseitig und durch den Boden unterseitig begrenzt; die Verschlusslänge ist durch die Bodenstützen von dem Boden beabstandet, bzw. aufgeständert. Eine solche Bodenstütze verfügt über einen bodenseitig montierbaren Schaft und oberseitig über ein Auflager für die Verschlusslänge. Als Auflager wird üblicherweise eine über den Schaft auskragende Traverse eingesetzt. Seitliche an die Bodenstütze angeschlossene Schließbleche können zur Ausbildung eines geschlossenen durch Boden, Verschlusslänge und Seitenbleche gebildeten Kabelkanals ebenfalls vorgesehen sein.

Als Verschlusslänge kann etwa ein Deckel, der durchaus auch U-förmig - mit nach unten weisenden, die Seitenbleche ausbildenden Schenkeln - vorgesehen sein. Alternativ kann auf der Traverse ein Kabelträger als Verschlusslänge vorgesehen sein, an bzw. in dem Kabel und Leitungen verlegt werden können, sodass sich zwei räumlich voneinander getrennte, stockwerkartig angeordnete Kabeltrassen - zwischen Boden und Kabelträger einerseits und innerhalb des Kabelträger andererseits - ergeben. Oberseitig ist ein solcher Kabelträger üblicherweise abermals mit einer Verschlusslänge, etwa einem Deckel, verschlossen.

Eine Bodenstütze für ein solches Kabeltragsystem ist durch die Anmelderin unter der Typenbezeichnung BSS 190 xxx FT in den Markt gebracht worden. Eine solche Bodenstütze weist eine bodenseitig zu montierende Bodenplatte auf. An der Bodenplatte sind zwei von der Bodenplatte abragende, rückenseitig zueinander weisende C-Profile angeschweißt, die gemeinsam den Schaft der Bodenstütze darstellen. Oberseitig auf den oberen Abschluss der beiden den Schaft bildenden C-Profile ist eine mit ihrem Rücken nach oben weisende, C-profilierte Traverse aufgeschweißt. Eine solche Ausgestaltung offenbart auch DE 10 2018 107 020 A1.

Zur Montage der Bodenstütze wird die Bodenplatte auf dem Boden, etwa dem Hallenboden, verschraubt. Anschließend werden Gleitmuttern in die den Schaft bereitstellenden C-Profile eingebracht, um hieran Installationsmaterial, etwa Rohrklemmen zu befestigen, um Leitungen zu halten. Ergänzend oder alternativ können Kabel und/oder Leitungen benachbart zu dem Schaft auf dem Boden verlegt. Abschließend wird eine Verschlusslänge montiert, die durch die Traverse abgestützt ist.

Bei diesen Bodenstützen ist sowohl die Herstellung als auch die Montage der Bodenstütze beziehungsweise des Kabeltragsystems verbesserungswürdig:
Im Herstellprozess muss für einen erforderlichen Korrosionsschutz aufgrund des Verschweißens der einzelnen Profile miteinander die gesamte Bodenstütze tauchfeuerverzinkt werden, was energieintensiv ist und eine Nacharbeit an Öffnungen und Ablaufkanten durchgeführt werden.

Bei der Montage ist die Befestigung der Bodenstütze auf dem Boden in Traversenlängserstreckung besonders wichtig, um ein Verkippen des Kabeltragsystems, insbesondere wenn dieses begehbar ist und auf die Kante der Verschlusslänge Kraft einwirkt, zu vermeiden. Dies gestaltet sich jedoch mitunter als schwierig aufgrund der über die Bodenplatte hinaus auskragenden Traverse, die ein einfaches Einführen eines Bohrers und eines Schraubgerätes in genau die unterhalb der Traverse eingebrachten Befestigungslöcher erschwert oder gar verhindert.

Ferner werden zum Halten von Installationsmaterial relativ kostenträchtige Gleitmuttern als Befestigungsgrund für zusätzliche Befestigungsmittel für Leitungen, beispielsweise Rohrklemmen eingesetzt, die überdies in die den Schaft bildenden Profile eingebracht werden oder bereits vor dem stirnseitigen Verschließen der Profilkanalmündungen darin eingesetzt sein müssen.

Für eine Befestigung der Verschlusslänge an der Traverse müssen üblicherweise Löcher in die Traverse vor Ort gebohrt werden. Da die hierbei entstehenden Späne ein Sicherheitsrisiko für die in dem Kabeltragsystem verlegten Kabel und Leitungen darstellen, müssen diese aufwendig abgesaugt werden. Selbiges ist auch beim Einsatz von Bohrschrauben zu beachten.

Für verschiedene Kabeltrassenquerschnitte (Höhe und Breite) müssen verschiedene Größen an Bodenstützen vorgehalten werden, die zudem jeweils gemäß unterschiedlichen Gewichtsklassen ausgelegt sein müssen. Dies resultiert in einer großen Derivatenvielfalt.

Aufgabe der Erfindung ist es, eine Bodenstütze und eine Anordnung einer Bodenstütze mit einer Verschlusslänge bereitzustellen, die die vorstehend genannten Nachteile überwinden.

Diese Aufgabe wird gelöst durch eine eingangsgenannte, gattungsgemäße Bodenstütze eines Kabeltragsystems mit den Merkmalen des Anspruchs 1 sowie durch eine eingangsgenannte, gattungsgemäße Anordnung mit den Merkmalen des Anspruchs 16.

Vorteilhafte Ausgestaltungen ergeben sich aus den abhängigen Ansprüchen sowie der Beschreibung.

Kern der Erfindung ist es, die Bodenstütze - im Gegensatz zum Stand der Technik - mehrteilig auszugestalten: Die Bodenstütze umfasst ein Unterteil und ein Oberteil. Das Oberteil wird an dem bodenseitig zu montierenden, den Stützschaft bereitstellenden Unterteil montiert und ist nach Art einer Traverse ausgeführt. Das Oberteil und das Unterteil werden zum Ausbilden der Bodenstützte nicht miteinander verschweißt (dann wären sie einteilig), sondern mittels Befestigungsmitteln miteinander verbunden. Durch den Verzicht auf ein Verschweißen der beiden Teile miteinander wird Energie eingespart. Das Unterteil und/oder das Oberteil können jeweils einstückig sein - dann ist die Bodenstütze insgesamt als zweiteilig anzusehen - oder selbst wiederum mehrteilig ausgebildet sein.

Das Herstellen der Verbindung zwischen Oberteil und Unterteil kann gleichermaßen werksseitig oder vor Ort auf der Baustelle erfolgen. In letzterem Fall kann das Unterteil, welches etwa über nach außen ragende Montagelaschen oder eine von oben zugängliche, jedenfalls bodenseitig zu montierende Bodenplatte verfügt, auf dem Boden montiert werden, ohne dass das üblicherweise den Schaft überkragende Oberteil hierbei hinderlich wäre, sodass eine bodenseitige Befestigung auch an den Stellen möglich ist, in denen bei montiertem Oberteil dieses mit seiner Längserstreckung über den Schaft hinausragt.

Des Weiteren kann auch etwaig zu montierendes Installationsmaterial an dem Schaft des Unterteils vor dem Montieren des Oberteils einfacher montiert werden. Auch dann wirkt im Unterschied zum Stand der Technik das noch nicht montierte Oberteil nicht montageerschwerend.

Während das den Schaft umfassende Unterteil maßgeblich die Höhe der durch die Bodenstütze bereitgestellten Kabeltrasse beeinflusst, beeinflusst das Oberteil die Breite der Kabeltrasse. Durch das Vorsehen einer Trennung zwischen Oberteil und Unterteil ist eine Schnittstelle zwischen Oberteil und Unterteil bezüglich der Verbindung der beiden Teile bereitgestellt. Diese kann bezüglich bestimmter Abmessungen (etwa den Abstand verschiedener Befestigungsmittel zueinander, die Weite einer Aufnahme etc.) gleich gehalten sein. So kann ein Unterteil für eine erste Höhe ohne Weiteres mit für verschiedene Breiten ausgelegten Oberteilen kombiniert werden und andersherum. Üblicherweise wird man dabei innerhalb einer Belastungsklasse eine einheitliche Schnittstelle vorsehen, für verschiedene Belastungsklassen typischerweise unterschiedlicher Schnittstellen. Eine solche Schnittstelle ist üblicherweise durch zueinander passende Befestigungsmittel ausgestaltet. Auf diese Weise müssen wesentlich weniger unterschiedliche Bodenstützen vorgehalten werden, um gleichzeitig die notwendige Vielfalt abzubilden. Die Befestigungsmittel an Unterteil und Oberteil sind innerhalb unterschiedlicher Teile einer Belastungsklasse gleich ausgeführt, sodass eine beliebige Kombination zwischen Unterteil und Oberteil vorgenommen werden kann.

Durch Befestigen des Oberteils an dem Unterteil durch zusätzliche Befestigungsmittel ist bei Einsatz von verzinkten Teilen (Oberteil und Unterteil) ein nachträgliches Tauchfeuerverzinken während des Produktionsprozesses im Unterschied zu einer Schweißverbindung zwischen diesen beiden Teilen nicht erforderlich. Insbesondere kann das Unterteil und/oder das Oberteil als Biegeteil, insbesondere als Stanzbiegeteil ausgeführt sein. So kann das Unterteil im Wesentlichen U-förmig durch eine Bodenplatte und zwei gegenüberliegende, an die Bodenplatte angeschlossene, den Stützschaft bildende Seitenwände ausgestaltet sein. An die oberen Abschlüsse der Seitenwände wird dann das Oberteil montiert. Auch das Oberteil kann als U- oder C- Profil gekantet oder durch ein entsprechendes Profil bereitgestellt werden. Zum Korrosionsschutz können die gekanteten Bauteile aus korrosionsbeständigem Material oder aus vorbeschichtetem Material, etwa aus verzinktem Material bereitgestellt sein, was wesentlich kostengünstiger ist als eine Tauchfeuerverzinkung. Vorbeschichtetes Material ist bereits vor der Verarbeitung mit einer Korrosionsschutzschicht überzogen, sodass eine nachträgliche Beschichtung nicht notwendig ist. Auch korrosionsbeständiges Material müsste nach einem Verschweißen nachbearbeitet, etwa durch ein Beizen und anschließendes Passivieren im Bereich der Schweißnaht.

Die Seitenwände sind an gegenüberliegende Seiten der Bodenplatte bevorzugt angeformt, typischerweise durch entsprechendes Abkanten derselben. Die Bodenplatte stellt Aussparungen bereit, damit das Unterteil bodenseitig befestigt werden kann, bevorzugt quer zueinander ausgerichtete Langlöcher für eine genaue Ausrichtmöglichkeit. Die Längserstreckung der Bodenplatte folgt der Erstreckungslängsrichtung des Oberteils, um eine Querabstützung des Kabeltragsystems zu gewährleisten.

Die Bodenplatte kann zwei Abstützbereiche aufweisen, mit denen sie den Boden kontaktiert und an denen sie an dem Boden montiert ist. Die vorstehend genannten Aussparungen sind dann in den Abstützbereichen angeordnet. Zwischen diesen Abstützbereichen kann die Bodenplatte über Aussparungen verfügen oder die Bodenstütze ist jedenfalls von dem Boden dazwischen beabstandet. Die Abstützbereiche sind dazwischen nicht zu groß gehalten. Bezweckt wird hiermit eine lokale Abstützung der Bodenstütze an dem Boden, um zwischen den Montagebereichen gegebenenfalls vorhandene Unebenheiten des Bodens zu überragen. So kann die Bodenstütze etwa an Plattenübergängen in Hallenböden, die naturgemäß uneben sind, montiert werden, ohne dass der gesamte nach unten weisende Teil der Bodenstütze auf dem Boden aufliegen muss. So werden auch unreine Ränder an Plattenbegrenzungen überbrückt, ohne dass die Bodenstütze an diesen Unebenheiten instabil abgestützt ist.

Zur Montage des Oberteils an dem Unterteil ist vorzugsweise an dem Stützschaft eine Aufnahme ausgebildet, in die das Oberteil einsetzbar ist. Diese Aufnahme kann durch die Seitenwände des Schaftes bereitgestellt sein. Zwischen den Endabschnitten der Seitenwände befindet sich dann ein Aufnahmeraum, in den das Oberteil einzusetzen ist. Seitlich ist das Oberteil dann durch diese Seitenwandabschnitte zumindest abschnittsweise eingefasst. Vorzugsweise befinden sich die unterteilseitigen Befestigungsmittel zum Herstellen einer Verbindung mit dem Oberteil in dem die Einfassung für den Aufnahmeraum bereitstellenden Seitenwandabschnitten des Unterteils.

Zum kraftschlüssigen Verbinden des Oberteils mit dem Unterteil sind verschiedene Befestigungsmittel, auch kombiniert, vorgesehen, nämlich zumindest eine Schraubverbindung und/oder Rastverbindungen. So können miteinander korrespondierende bzw. komplementäre Raststrukturen an dem Oberteil und dem Unterteil vorgesehen sein, die bei montiertem Oberteil formschlüssig ineinandergreifen. Raststrukturen sind ohne größeren Aufwand in einem Stanzprozess herzustellen und bieten hohe Haltekräfte bei einem minimalen Montageaufwand. So kann das Unterteil etwa über eine positive Raststruktur, etwa einen Rastvorsprung verfügen, während das Unterteil über eine negative Raststruktur, etwa eine Aussparung verfügt, in die die positive Raststruktur bei montiertem Oberteil eingreift. Zum formschlüssigen Verbinden ist die positive Raststruktur üblicherweise aus dem die Raststruktur umgebenden Material ausgestellt und die von dem umgebenden Material getrennte Stirnseite des die Raststruktur bereitstellenden Bleches weist bevorzugt in Belastungsrichtung. Durch das in Belastungsrichtung weisende Material wird ein hohes Widerstandsmoment bereitgestellt.

Bevorzugt ist vorgesehen, dass die Stirnseiten der Raststrukturen in Gewichtskraftrichtung wenn montiert aneinander anliegen. Auf diese Weise wird die Hauptbelastungsrichtung - die Gewichtskraftrichtung - besonders sicher abgestützt, was von Vorteil ist, wenn es sich um ein begehbares Kabeltragsystem handelt.

In vielen Fällen wird man mehrere Raststrukturen vorsehen, die auch gegenüberliegend angeordnet sein können, bevorzugt fluchtend gegenüberliegend.

Die zumindest eine positive Raststruktur ragt üblicherweise in den Aufnahmeraum hinein. Wird die Aufnahme durch die Seitenwände des Unterteils bereitgestellt und ist das Oberteil zwischen den Seitenwänden aufgenommen, können die Seitenwände während der Montage elastisch gespreizt werden, um Raum für die positiven Raststrukturen während des Einsetzens des Oberteils zu schaffen. Durch die Materialelastizität des Unterteils stellen sich die Seitenwände zurück, sobald die positiven Raststrukturen in die negativen Raststrukturen eingreifen. Auf diese Weise ist das Unterteil an dem Oberteil gesichert.

Zur Sicherung einer solchen Rastverbindung oder auch alternativ hierzu kann zumindest eine Sicherungselement, etwa eine Blechsicherung, eine Nieten- oder Splintverbindung oder Führungselemente, die ein ungewolltes Aufbiegen verhindern, vorgesehen sein. Vor diesem Hintergrund ist die Wirkrichtung des Sicherungselementes, soweit notwendig, üblicherweise in Seitenwandspreizrichtung. Bevorzugt ist jedoch eine Schraubenverbindung zwischen Oberteil und Unterteil, ebenfalls etwa in vorstehend angesprochener Seitenwandspreizrichtung, vorgesehen. Deren Längserstreckung weist üblicherweise quer zur Gewichtskraftrichtung. Bevorzugt werden beide Seitenwände mit dem Oberteil zumindest jeweils an einer Stelle, bevorzugt an mehreren Stellen verschraubt. Hierdurch wird das Unterteil ferner gegenüber einer Torsionsbelastung stabilisiert. Sollte das Unterteil im Wesentlichen U-förmig ausgebildet sein, wird es durch das Oberteil in seinem Verlauf geschlossen, sodass eine Schubbewegung der Seitenwände verhindert ist.

Bevorzugt ist vorgesehen, dass der Schaft entlang seines Verlaufs in einem zu der Bodenplatte weisenden Abschnitt eine erste Breite und in einem sich daran anschließenden Abschnitt eine zweite, geringere Breite aufweist. Die Breitenrichtung weist üblicherweise in Längserstreckungsrichtung des Oberteils. Die erste Breite kann etwa zumindest doppelt, weiter bevorzugt etwa drei Mal so groß sein, wie die zweite Breite. Der Abschnitt dieser ersten Breite geht in den Abschnitt der zweiten, kleineren Breite bevorzugt im Wesentlichen kontinuierlich über, etwa durch Ausbilden einer Schräge mit einem Winkel von etwa zwischen 7° und 20°. Der erste Abschnitt braucht nicht sonderlich hoch zu sein. Üblicherweise ist es ausreichend, wenn er sich etwa nur über 1/5 oder 1/6 der Höhe des Abschnittes zweiter Breite oder weniger in Schaftlängserstreckung erstreckt. Durch ihn wird eine bodenseitige Stabilisierung der Bodenstütze und der Bodenplatte bewirkt.

Ergänzend oder auch in Alleinstellung kann vorgesehen sein, dass in dem zu dem Oberteil weisenden Endabschnitt des Schaftes dieser eine dritte, gegenüber der zweiten Breite größere Breite aufweist, sodass dieser Abschnitt über den zweiten Abschnitt hinausragt. Dieser dritte Abschnitt stellt bevorzugt die Aufnahme des Oberteils bereit. So ist insbesondere vorgesehen, dass die Befestigungsmittel zum Befestigen des Oberteils an dem Unterteil in dem den zweiten Abschnitt überragenden Bereich des dritten Abschnittes angeordnet sind. Hierdurch wird aufgrund des großen Hebelarms eine besonders sichere Krafteinleitung gewährleistet.

Der Schaft ist üblicherweise entlang seiner gesamten Längserstreckung weniger dick als breit. Die Dicke des Schaftes weist quer zur Längserstreckungsrichtung der Breite. So ist etwa der Abstand der beiden Seitenwände voneinander geringer als ihre Breite.

Ist der Schaft durch Seitenwände eines im Wesentlichen U-förmigen Unterteils bereitgestellt, kann zur Stabilisierung der Seitenwände vorgesehen sein, dass an zumindest einer, bevorzugt an beiden der Schafterstreckung folgenden Seiten einer Seitenwand ein von der Seitenwand etwa rechtwinklig abragender Stabilisierungsschenkel angeformt ist. Dieser kann von der Seitenwand abgekantet sein. Er kann sich auch nur über einen Abschnitt entlang des Verlaufs des Schaftes erstrecken, bevorzugt den Bereich des vorstehend genannten zweiten Abschnittes. Durch den Stabilisierungsschenkel wird einem Ausknicken der Seitenwand bei einer Gewichtsbelastung in Gewichtskraftrichtung entgegengewirkt. Bevorzugt weisen beide Seitenwände zumindest ein, bevorzugt zwei Stabilisierungsschenkel auf.

Die Stabilisierungsschenkel können so ausgestaltet sein, dass im zweiten Abschnitt der Seitenwände ein geschlossener Turm bereitgestellt ist, indem die Stabilisierungsschenkel zu einem gegenüberliegenden Bereich der anderen Seitenwand hinüberragen. Die Stabilisierungsschenkel können auch in die jeweils gegenüberliegende Seitenwand oder damit verbundenem Material eingreifen und so die Seitenwände auch aneinander abstützen.

Besonders bevorzugt weisen beide Seitenwände an ihren beiden der Längserstreckung folgenden Seiten gegenüberliegende, zueinander weisend ausgerichtete Stabilisierungsschenkel auf. Diese greifen mit ihren Stirnseiten bevorzugt kammartig ineinander. Auf diese Weise wird mit einfachen Mitteln und ohne eine Fügeverbindung benötigen zu müssen ein besonders torsionssteifer Schaft bereitgestellt.

Bevorzugt wird eine kammartige Struktur der freien Stabilisierungsschenkelenden gewählt, wobei die Flanken der Zinken und der dazu korrespondierenden Ausnehmungen über einen Winkel gegenüber der Senkrechten geneigt sind, die eine Entformung während des Auseinanderbiegens der beiden Seitenwände nicht verhindert. Dieser Winkel beträgt etwa zumindest 45°, bevorzugt zumindest 55° gegenüber der Längserstreckung des Stützschaftes. Auf diese Weise sind die Seitenwände einerseits torsionsfest und gegenüber einer Schubbewegung abgestützt, andererseits ist ein Aufbiegen der gegenüberliegenden Seitenwände zum Einsetzen des Oberteils in eine durch die Seitenwände bereitgestellte Aufnahme trotz dieses kammartigen Eingreifens ohne weiteres möglich.

Zur weiteren Stabilisierung oder auch in Bereichen der Seitenwände, die nicht über Stabilisierungsschenkel verfügen, können ein oder mehrere, etwa im 45° Winkel gegenüber der Schaftlängserstreckung ausgerichtete Stabilisierungssicken in die Seitenwände eingebracht sein.

Bevorzugt ist vorgesehen, dass die Seitenwände entlang ihrer im Wesentlichen gesamten Schafterstreckung etwa durch Stabilisierungsschenkel und/oder durch eine oder mehrere Sicken versteift sind. Um trotzdem ein Auseinanderbiegen der beiden Seitenwände zum Montieren des Oberteils in die durch die Seitenwände bereitgestellte Aufnahme zu ermöglichen, wird als elastisches Gelenk der Übergang von der Bodenplatte zur Seitenwand genutzt. Aufgrund der Schafterstreckung ist der Biegewinkel in diesem Übergang nur sehr gering für einen bestimmten Spreizweg in der Aufnahme zum Einsetzen des Oberteils.

Zur Stabilisierung der Bodenplatte, vor allem gegenüber Verwindungen kann vorgesehen sein, dass an deren Enden quer zu den Seitenwänden nach oben weisende Stützschenkel angeordnet sind. Diese stabilisieren die Bodenplatte quer zu den Seitenwänden. Diese erstrecken sich vorzugsweise zwischen den Seitenwänden, sodass die Seitenwände an diesen Stützschenkeln kontaktierend abgestützt sind, und zwar gegen eine zueinander weisende Bewegung, die etwa unter Belastung bei einem Ausknicken auftreten kann.

Zur Montage von Rohrklemmen oder sonstigem Installationsmaterial an dem Schaft sind bevorzugt in den Schaft zumindest ein, vorzugsweise jedoch mehrere Gewindebuchsen eingebracht, an denen das Installationsmaterial montiert werden kann. Bevorzugt ist das Gewinde als Gewindedurchzug ausgebildet. Hierdurch wird eine schnellere und einfachere Montage ermöglicht; die Montagezeit kann gegenüber einer herkömmlichen Montage um bis zu 80 % verkürzt werden. Durch das Vorbereiten von Gewindedurchzügen entstehen bei der Montage keine unerwünschten Späne.

Bevorzugt ist das Oberteil in seinem Querschnitt ein C-Profil. Es verfügt über einen Rücken sowie zwei daran angeformte, an ihren freien Enden abgekantete Schenkel. Gegenüber dem Unterteil kann das Oberteil so ausgerichtet sein, dass die Öffnungsrichtung des Profils nach oben oder nach unten weist. Ist das C-Profil mit seiner Öffnungsrichtung nach oben ausgerichtet, kann über das Oberteil eine große Gewichtskraft übertragen werden, ohne dass die Gefahr besteht, dass dieses ausknickt. Weist der Rücken des C-Profils nach oben, ist ein durchgängiger Montagegrund beispielsweise für eine Kabelrinne zur Verfügung gestellt. In diesen kann zumindest eine, üblicherweise mehrere, versetzt zueinander angeordnete Durchbrechungen zum Hindurchführen von Verbindungselementen, etwa Schraubverbindungen, vorgesehen sein. Bevorzugt ist vorgesehen, dass in den Montagegrund zumindest ein, bevorzugt mehrere, versetzt zueinander angeordnete Gewinde, etwa in Form von Gewindedurchzügen, eingebracht sind, um weitere Elemente des Kabeltragsystems montieren zu können, und zwar ebenfalls ohne das Späne anfallen. Letztere Ausgestaltung hat den Vorteil, dass die Montagerichtung lediglich von oben möglich ist, was den Vorgang der Montage erheblich vereinfacht.

Das Oberteil kann an seinen distalen Enden ebenfalls abgekantet sein, sodass auch in Richtung der distalen Enden des Oberteils ein Flächenabschnitt weist. Mithin ist der durch das C-Profil bereitgestellte Hohlraum endseitig verschlossen. An diese Flächenabschnitte können seitlich in Bezug auf das Oberteil Elemente, etwa Verkleidungsbleche, befestigt werden. Auch eine Befestigung nach unten weisender Schenkel eines U-förmigen Deckels als Verschlusslänge ist an diesen Flächenabschnitten, etwa mittels einer im Wesentlichen waagerechten Schraubverbindung, möglich, sodass ein nach oben weisender Schraubenkopf einer senkrechten Schraubverbindung in Gewichtskraftrichtung, der als Stolpergefahr angesehen werden könnte, vermieden wird.

In einer Weiterbildung ist vorgesehen, dass als ein Zubehörteil zu der Bodenstütze eine Befestigungsapplikation an dem Oberteil angeschlossen ist. Diese Befestigungsapplikation ist nach Art einer Gleitmutter ausgebildet und bildet einen Montagegrund, etwa für weiteres Installationsmaterial oder weitere Elemente des Kabeltragsystems. Die Befestigungsapplikation umfasst zwei voneinander beabstandete, mit ihrer flächigen Erstreckung zueinander weisende Klemmplatten. Diese beiden Klemmplatten sind durch zumindest einen, bevorzugt mehrere, voneinander beabstandete Stege, die üblicherweise jeweils an den Rand der beiden Klemmplatten angeschlossen, etwa angeformt sind, miteinander verbunden. Eine solche Befestigungsapplikation kann als Stanzbiegeteil, etwa aus einem bandverzinkten Material, ausgeführt sein; die Befestigungsapplikation kann an dem oder den Stegen buchartig zusammengefaltet werden, sodass die Klemmplatten zueinander weisen.

Die beiden Klemmplatten sind voneinander beabstandet, und zwar mit einem Abstand, dass zwischen ihnen die abgewinkelten Schenkelfortsätze der Schenkel des C-profilierten Oberteils eingreifen können, wenn die Befestigungsapplikation an dem C-Profil vormontiert ist. Durch den Kontakt zwischen Klemmplatten und Schenkelfortsätzen und die zueinander weisende Klemmkraft der beiden Klemmplatten, die durch den Steg auf die Klemmplatten aufgebracht ist, ist die Befestigungsapplikation an dem C-Profil reibschlüssig gehalten. Um eine gewisse Elastizität zwischen den beiden Klemmplatten bereit zu stellen, können der oder die Stege U-förmig ausgebildet sein. Durch die U-Form wird eine Elastizität in Aufspreizrichtung zwischen den beiden Klemmplatten bereitgestellt. Bevorzugt sind vor diesem Hintergrund der oder die Stege nur an einer Seite der Klemmplatten angeordnet, sodass die Klemmplatten von der anderen Seite aufgebogen werden können. Vor diesem Hintergrund versteht sich auch, dass die Befestigungsapplikation ein Biegeteil, bevorzugt ein Stanzbiegeteil ist.

Zusätzlich verfügen beide Klemmplatten über miteinander fluchtende Durchbrechungen, wobei eine Klemmplatte - die erste Klemmplatte - über einen Gewindedurchzug in der Durchbrechung verfügt, während die Durchbrechung in der zweiten Klemmplatte im Durchmesser größer ist als der Innendurchmesser des Gewindedurchzugs. Die erste Klemmplatte ist zu dem Rücken des C-Profil weisend in dem Hohlraum des C-Profils angeordnet. Durch die Durchbrechung kann eine Schraube hindurchgeführt werden, mit welcher auch Installationsmaterial oder weitere Teile des Kabeltragsystems an der Befestigungsapplikation befestigt werden können. Durch den durch den Schraubenkopf auf die zweite Klemmplatte aufgebrachten Druck beziehungsweise den über das Gewinde in die erste Klemmplatte eingebrachten Zug werden die beiden Klemmplatten gegeneinander unter Zwischenschaltung der Schenkelfortsätze des C-Profils verspannt und so die Befestigungsapplikation an dem C-Profil verklemmt.

Es versteht sich, dass zum Verklemmen die Klemmplatten eine Länge aufweisen, die größer ist als der Abstand der Schenkelfortsätze des C-Profils voneinander (die lichte Weite des C-Profils im Bereich der Schenkelfortsätze), sodass die Schenkelfortsätze und die Klemmplatten, wenn montiert, überlappen. Jedenfalls die Länge der ersten Klemmplatte ist zudem kleiner als die innere Weitere der Schenkel.

Da die Stege den Abstand zwischen den beiden Klemmplatten überbrücken und hierzu (auch) zwischen den Schenkelfortsätzen angeordnet sind, sind diese so angeordnet, dass diese während der Montage ein Verschwenken der Klemmplatten nicht behindern.

Zur Montage der Befestigungsapplikation an dem C-Profil kann die Befestigungsapplikation an einem Ende des C-Profils aufgeschoben werden. In einer bevorzugten Ausgestaltung ist jedoch vorgesehen, dass die Breite der Befestigungsapplikation im Bereich der ersten Klemmplatte sowie dem Bereich, der zwischen den Schenkelfortsätzen vorgesehen ist, in einer Montageausrichtung kleiner ist, als die lichte Weite zwischen den Schenkelfortsätzen. In dieser Ausrichtung ist die Befestigungsapplikation an jeder beliebigen Stelle des C-Profils in dasselbe einsetzbar. Dann wird die Befestigungsapplikation um ihre Hochachse gedreht, sodass die Klemmplatten über bzw. unter die Schenkelfortsätze verschwenkt werden und die Befestigungsapplikation in ihre Klemmstellung gelangt. Bevorzugt ist in dieser Ausgestaltung vorgesehen, dass die zweite Klemmplatte in der Montageausrichtung abschnittsweise über den äußeren Rand der ersten Klemmplatte hinausragt und den Schenkelfortsatz des C-Profils außenseitig kontaktiert. Auf diese Weise wird ein Anschlag bereitgestellt, der ein weiteres Einführen der Befestigungsapplikation in den durch die Schenkel einhüllenden Raum des C-Profils hinein unterbindet. Auf diese Weise wird die Montage der Befestigungsapplikation an dem C-Profil vereinfacht.

Bevorzugt ist ferner vorgesehen, dass die Befestigungsapplikation in das C-Profil mit der ersten Klemmplatte nur in einer solchen Ausrichtung eingeführt werden kann, in der die zweite Klemmplatte einen Anschlag bereitstellt, indem die Befestigungsapplikation eine entsprechende Außenkontur aufweist.

Bevorzugt ist ferner vorgesehen, dass die diagonal gegenüberliegenden, zum Montieren der Befestigungsapplikation auf den Schenkelfortsatz aufzuschwenkenden Ecken der ersten Klemmplatte als Schräge oder als Radius ausgestaltet sind, sodass beim Aufschieben der ersten Klemmplatte auf die Schenkelfortsätze deren Kanten gegenüber der Erstreckung der Kante des Schenkelfortsatzes unter einem Winkel angestellt sind, etwa einem Winkel von mindestens 7° bis 10°. Hierdurch wird ein Aufschieben erleichtert. Auch kann die aufzuschiebende Kante der Klemmplatte und/oder die Kante der Schenkelfortsätze über eine Fase verfügen die als Aufführschräge genutzt wird.

Die vorstehenden Ausführungen zu der Befestigungsapplikation kann selbstverständlich auch im Zusammenhang mit einem anderen C-Profil eingesetzt bzw. verwendet werden, welches nicht Teil einer Bodenstütze ist.

Eine auf diese Weise ausgerüstete Bodenstütze verfügt somit über eine Vielzahl an möglichen Anbindungspunkten, die an den Stellen vorgesehen sein können, die für die weitere Montage benötigt werden.

In das Oberteil können auch an entsprechenden Positionen Gewinde, etwa Gewindedurchzüge, zur Montage der Verschlusslänge eingebracht sein. Ist das Oberteil als C-Profil ausgebildet, sind diese Gewinde insbesondere in dem Rücken des C-Profils ausgebildet.

Oberseitig auf dem Oberteil kann als Verschlusslänge ein Kabelträger, etwa ein Kabelkanal, befestigt, etwa aufgeschraubt sein. Auf dieser Weise ist der Kabelträger durch die Bodenstützen aufgeständert. Es können Kabel und/oder Leitungen an dem Stützschaft einerseits und in dem Kabelträger andererseits verlegt werden, wobei eine räumliche und damit organisatorische Trennung zwischen diesen beiden Bereichen bereitgestellt ist.

Bevorzugt ist vorgesehen, dass der Kabelträger, seiner Längserstreckung folgend, eine Abfolge an Langlöchern aufweist, vorzugsweise zu beiden Seiten seiner Längserstreckung. Auch das Oberteil der Bodenstütze weist zumindest ein, bevorzugt ebenfalls beidseitig Gewindebuchsen bzw. Gewindedurchzüge auf, die an korrespondierender Stelle zu dem Kabelträger vorgesehen sind. Mittels einer ein (beliebiges) Langloch des Kabelträgers durchgreifenden Schraube kann dieser an dem Oberteil befestigt werden.

Die Erfindung wird nachstehend unter Bezugnahme auf die Figuren anhand eines Ausführungsbeispiels näher erläutert. Es zeigen:
- **Fig. 1:**: Eine Explosionsdarstellung einer Bodenstütze,
- **Fig. 2:**: die in Figur 1 dargestellte Bodenstütze in einer Zusammenbauansicht,
- **Fig. 3:**: die in Figur 1 dargestellte Bodenstütze, bestückt mit Rohrklemmen,
- **Fig. 4:**: eine Schnittansicht des Oberteils der Bodenstütze der Figur 1,
- **Fig. 5:**: eine dreidimensionale Ansicht einer Befestigungsapplikation,
- **Fig. 6:**: eine Seitenansicht der in Figur 5 dargestellten Befestigungsapplikation und
- **Fig. 7:**: eine Unteransicht der in Figur 5 dargestellten Befestigungsapplikation.

In den Figuren werden gleiche Teile mit gleichen Bezugszeichen bezeichnet.

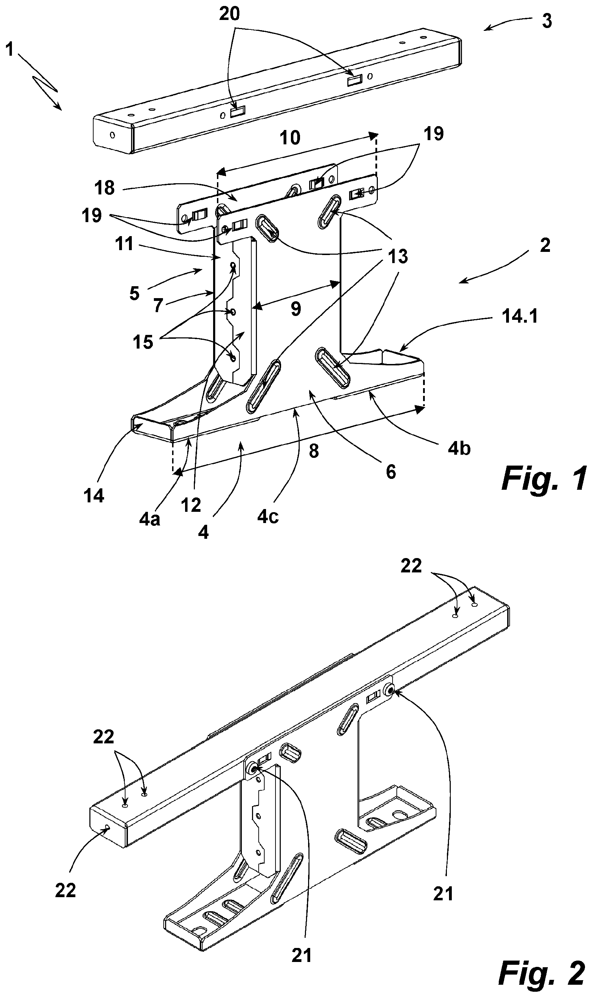

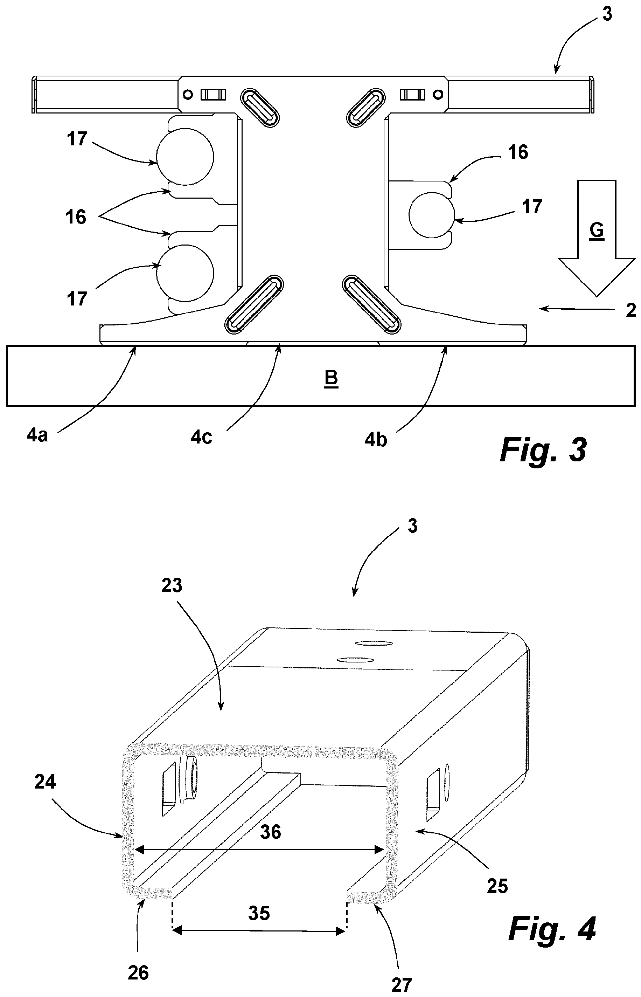

Figuren 1 bis 3 zeigen eine zum Ausbilden eines begehbaren Kabeltragsystems auf einem lediglich in Figur 3 gezeigten Boden B, etwa einem Hallenboden, montierte Bodenstütze 1, welche zweiteilig aus einem Unterteil 2 und einem Oberteil 3 gebildet ist. Das Unterteil 2 verfügt über eine Bodenplatte 4 zum bodenseitigen Montieren des Unterteils 2 sowie über einen Stützschaft 5.

Zu erkennen ist, dass die Bodenplatte 4 unterbrochen ausgestaltet ist (ausgesparter Bereich 4c) und zwei Abstützbereiche 4a, 4b bereitstellt, an denen die Bodenplatte 4 auf dem Boden B aufsteht und an diesem befestigt ist.

Das Unterteil 2 ist ein Stanzbiegeteil und aus bandverzinktem Material hergestellt. Es ist im Wesentlichen U-förmig: Die Bodenplatte 4 stellt den Steg und die Seitenwände 6, 7 die Schenkel des U's dar. Die Seitenwände 6, 7 sind nicht unmittelbar miteinander die Verzinkungschicht beschädigend verbunden, mithin: diese sind nicht miteinander verschweißt.

Die Seitenwände 6, 7 sind im Wesentlichen spiegelbildlich, teilweise komplementär zueinander aufgebaut, wie im weiteren Verlauf näher erläutert werden wird.

Beide Seitenwände 6, 7 lassen sich in drei Abschnitte verschiedener Breite entlang der Schaftlängserstreckung, ausgehend von der Bodenplatte 4, unterteilen: einen ersten Abschnitt einer ersten Breite 8, einen zweiten Abschnitt einer kleineren Breite 9 und einen dritten Abschnitt einer wieder etwas größeren dritten Breite 10. Zur Stabilisierung des zweiten Abschnittes verfügen die Wände 6, 7 über Stabilisierungsschenkel 11, 12, und zwar an beiden Seiten der Schafterstreckung folgend senkrecht von der jeweiligen Seitenwand 6, 7 abragend.

Die freien Enden der Stabilisierungsschenkel 11, 12 greifen kammartig ineinander, wobei die jeweiligen Ausnehmungen beziehungsweise Zinken in ihrem nicht senkrecht ausgebildeten Bereich einen Winkel gegenüber der Senkrechten von mindestens etwa 55° Grad aufweisen. Durch das Ineinandergreifen der Stirnseiten der Stabilisierungsschenkel 11, 12 sind die Seitenwände 6, 7 gegenüber einer Schubbewegung gesichert und der Stützschaft 5 ist torsionsfest.

In den Abschnitten größerer Breiten (Breiten 8 und 10), mithin denjenigen Abschnitten, in denen entlang der Seiten der Seitenwände 6, 7 keine Stabilisierungsschenkel vorgesehen sind, sind im 45°-Winkel ausgerichtete Sicken 13 eingebracht, die diese Bereiche gegen ein Ausknicken aussteifen.

Die Bodenplatte 4 ragt seitlich über den Abschnitt der zweiten Breite 9 mit ihren Abstützbereichen 4a, 4b hinaus und verfügt an ihren distalen Enden über abgekantete, sich zwischen den Seitenwänden 6, 7 erstreckende Stützschenkel 14, 14.1. Die Seitenwände 6, 7 sind nach innen hin an diesen Stützschenkeln 14, 14.1 abgestützt.

In den Stützschaft 5 respektive in den Bereich zweiter Breite 9 sind in Bodenplattenlängserstreckung weisende Gewindedurchzüge 15 eingebracht.

An diesen können Rohrklemmen 16 (in Figur 3 gezeigt) montiert werden, um Rohre 17 an dem Stützschaft 5, respektive der Bodenstütze 1 zu halten.

Das Oberteil 3 ist ebenfalls ein Stanzbiegeteil, welches aus einem bandverzinkten Material bereitgestellt ist. Zur Vervollständigung der Bodenstütze 1 wird das Oberteil 3 zwischen die beiden Seitenwände 6, 7 in eine durch die Seitenwände 6, 7, nach oben weisende Aufnahme 18 eingesetzt. Zum Fixieren des Oberteils 3 an dem Unterteil 2, respektive an den Seitenwänden 6, 7 verfügen die Seitenwände 6, 7 über gegenüberliegende, miteinander fluchtende positive Raststrukturen 19, hier als aus den Seitenwänden 6, 7 ausgestellte Rastvorsprünge ausgebildet, welche in komplementäre negative Raststrukturen 20, hier ausgestaltet als Ausnehmungen, in das Oberteil 3 eingreifen. Die positiven Raststrukturen 19 ragen in die Aufnahme 18 hinein und somit in den zwischen den Seitenwänden 6, 7 bereitgestellten Raum. Die Stirnseiten der positiven Raststrukturen 19 weisen in Gewichtskraftrichtung G, sodass entgegen der Gewichtskraftrichtung G eine großes Widerstandsmoment bereitgestellt ist. Auf diese Weise ist das montierte Oberteil 3 an dem Unterteil 2 in Gewichtskraftrichtung G abgestützt.

Zum Einsetzen des Oberteils 3 in die Aufnahme 18 werden die beiden Seitenwände 6, 7 gespreizt. Da die beiden Seitenwände 6, 7 lediglich über die Bodenplatte 4 miteinander verbunden sind, stellt dies kein größeres Problem dar; die Länge des Stützschaftes 5 respektive der Seitenwände 6, 7 ermöglicht es, dass der Übergang von Bodenplatte 4 zu Seitenwänden 6, 7 nur um einen geringen Winkelbetrag verformt werden muss, damit die positiven Raststrukturen 19 so weit zurückgezogen werden, damit das Oberteil 3 in die Aufnahme 18 einsetzbar ist.

Zur Sicherung gegen ein ungewolltes Aufbiegen sowie zur Aussteifung der gesamten Bodenstütze 1 ist vorgesehen, die Seitenwände 6, 7 mit Schrauben 21 zu verbinden. Die Verbindung erfolgt jeweils in unmittelbarer Nähe zu den Rastverbindungen 19, 20. Durch die Rastverbindung 19, 20 und die Schraubverbindung 21 sind das Oberteil 3 und das Unterteil 2 fest miteinander verbunden, wobei das Unterteil 2 durch das Oberteil 3 zusätzlich gegenüber einer Torsion stabilisiert wird.

Auch das Oberteil 3 verfügt über Gewindedurchzüge 22 zum Montieren von Verschlusslängen, etwa einem Kabelträger und/oder Deckel- und Seitenschutzblechen.

Figur 4 zeigt einen Querschnitt durch das Oberteil 3. Das Oberteil 3 ist in seinem Querschnitt als C-Profil ausgeführt. Das C-Profil wird gebildet durch einen Rücken 23 sowie daran angeformte Schenkel 24, 25, die ihrerseits über abgewinkelte Schenkelfortsätze 26, 27 verfügen.

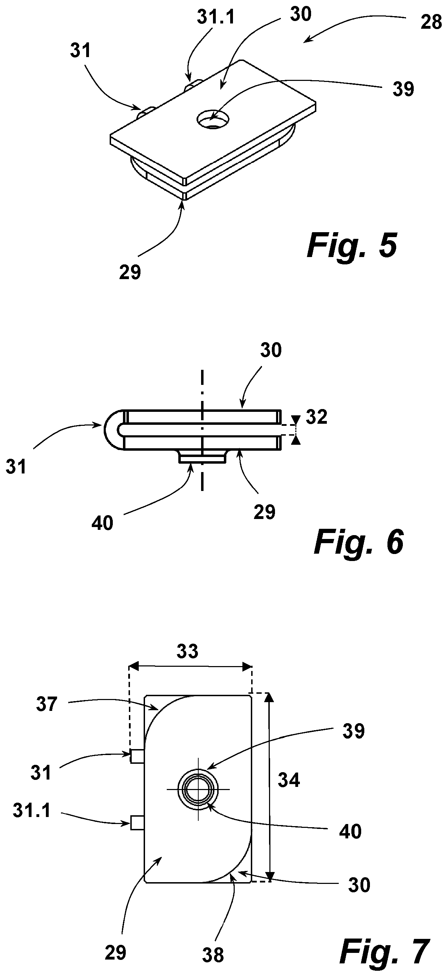

An diesem als C-Profil ausgebildeten Oberteil 3 kann eine Befestigungsapplikation 28, die in den Figuren 5 bis 7 dargestellt ist, angeschlossen werden. Die Befestigungsapplikation 28 wird gebildet durch zwei voneinander beabstandete Klemmplatten 29, 30, die über zwei U-förmige, an die Ränder der Klemmplatten 29, 30 angeformte Stege 31, 31.1 miteinander verbunden sind. Sie weisen einen solchen Abstand 32 zueinander auf, dass die Schenkelfortsätze 26, 27 zwischen den beiden Klemmplatten 29, 30 angeordnet werden können und gleichzeitig durch die Stege 31, 31.1 auf die Klemmplatten 29, 30 eine solche Klemmkraft aufgebracht wird, dass die Befestigungsapplikation 28 an dem als C-Profil ausgebildeten Oberteil 3 durch einen Reibschluss im Rahmen einer Vormontage gehalten ist.

Zur Montage der Befestigungsapplikation 28 an dem als C-Profil ausgebildeten Oberteil 3 wird diese in einer ersten Ausrichtung - der Montageausrichtung - zwischen die Schenkelfortsätze 26, 27 eingeführt, bis dass die erste Klemmplatte 29 auf der einen Seite und die zweite Klemmplatte 30 auf der anderen Seite der Schenkelfortsätze 26, 27 angeordnet ist. Dann wird die Befestigungsapplikation 28 um ihre Hochachse gedreht, sodass die erste Klemmplatte 29 auf die Schenkelfortsätze 26, 27 verschwenkt wird. Auf diese Weise werden die Schenkelfortsätze 26, 27 zwischen den beiden Klemmplatten 29, 30 eingespannt.

Zum Einbringen der Befestigungsapplikation 28 in den durch die Schenkel 24, 25 einhüllenden Raum weist die erste Klemmplatte 29 in der Montageausrichtung eine Breite 33 auf, die kleiner ist als die lichte Weite 35 zwischen den Schenkelfortsätzen 26, 27 (hier inklusive der abstehenden Stege 31, 31.1 in diesem Bereich) und eine Länge 34, die größer ist als die lichte Weite 35 zwischen den Schenkelfortsätzen 26, 27 und kleiner ist als die innere Weitere 36 zwischen den beiden Schenkeln 24, 25.

Zusätzlich sind die diagonal gegenüberliegenden Ecken 37, 38 der ersten Klemmplatte 29 mit einem Radius versehen, was ein Verschwenken der ersten Klemmplatte 29 auf die Schenkelfortsätze 26, 27 vereinfacht. Das Versehen der gerundeten Kanten 37, 38 mit einer Fase ausgehend von der zu der zweiten Klemmplatte 30 weisenden Seite der ersten Klemmplatte 29 vereinfacht den Montageprozess weiter, da hierdurch ein Verkanten unterbunden wird.

In diesem gerundeten Bereich überragt die zweite Klemmplatte 30 die erste Klemmplatte 29, sodass ein Anschlag durch die zweite Klemmplatte 30 bereitgestellt ist, der außenseitig an den Schenkelfortsätzen 26, 27 in der Montageausrichtung anliegt.

Beide Klemmplatten 29, 30 verfügen über jeweils eine Durchbrechung 39, 40. Die Durchbrechung der ersten Klemmplatte 29 weist einen Gewindedurchzug 40 auf. Ist die Befestigungsapplikation 28 in dem C-Profil vormontiert, mithin sind die Schenkelfortsätze 26, 27 zwischen den Klemmplatten 29, 30 angeordnet, kann an der Befestigungsapplikation 28 mittels einer nicht näher dargestellten Schraube etwa Installationsmaterial befestigt werden. Durch die durch die Schraubkraft eingebracht Druckkraft auf die beiden Klemmplatten 29, 30 werden diese zusammengedrückt und so zusätzlich an den Schenkelfortsätzen 26, 27 verspannt.

Die Erfindung ist anhand eines Ausführungsbeispiels erläutert worden. Ohne den Schutzbereich, beschrieben durch die Ansprüche, zu verlassen, ergeben sich für den Fachmann zahlreiche weitere Ausgestaltungen, den Erfindungsgedanken zu verwirklichen, ohne dass diese im Rahmen dieser Ausführungen näher erläutert werden müssten.

### Bezugszeichenliste

- 1: Bodenstütze
- 2: Unterteil
- 3: Oberteil
- 4: Bodenplatte
- 4a, 4b: Abstützbereich
- 4c: ausgesparter Bereich
- 5: Stützschaft
- 6, 7: Seitenwand
- 8: erste Breite
- 9: zweite Breite
- 10: dritte Breite
- 11, 12: Stabilisierungsschenkel
- 13: Sicke
- 14, 14.1: Stützschenkel
- 15, 22: Gewindedurchzug
- 16: Rohrklemme
- 17: Rohr
- 18: Aufnahme
- 19: positive Raststruktur
negative Raststruktur
- 21: Schraubverbindung
- 23: Rücken
- 24, 25: Schenkel
- 26, 27: Schenkelfortsätze
- 28: Befestigungsapplikation
- 29: erste Klemmplatte
- 30: zweite Klemmplatte
- 31, 31.1: Steg
- 32: Abstand zwischen Klemmplatten
- 33: Breite erste Klemmplatte
- 34: Länge erste Klemmplatte
- 35: lichte Weite zwischen Schenkelfortsätzen
- 36: innere Weite zwischen Schenkeln
- 37, 38: gegenüberliegende Ecken der ersten Klemmplatte
- 39: Durchbrechung
- 40: Durchbrechung mit Gewindedurchzug

- B: Boden
- G: Gewichtskraft

## Patentansprüche

1. Mehrteilige Bodenstütze (1) eines Kabeltragsystems mit einem bodenseitig zu montierenden, einen Stützschaft (5) bereitstellenden Unterteil (2) und mit einem an einem Ende des Stützschaftes (5) mit Befestigungsmitteln (19, 20, 21) montierten, nach Art einer Traverse ausgeführten Oberteil (3) als Montagegrund für ein oder mehrere weitere Teile des Kabeltragsystems, etwa einer Verschlusslänge, insbesondere eines Kabelträgers, wobei die Befestigungsmittel (19, 20, 21) eine Schraubverbindung und/oder Rastverbindung ist, **dadurch gekennzeichnet, dass** das Unterteil (2) im Wesentlichen U-förmig, umfassend eine bodenseitig zu montierende Bodenplatte (4) und zwei gegenüberliegende, an die Bodenplatte (4) angeformte, den Stützschaft (5) bildende Seitenwände (6, 7) ausgestaltet ist und wobei die Längserstreckung der Bodenplatte (4) der Erstreckungslängsrichtung des Oberteils (3) folgt.

2. Bodenstütze nach Anspruch 1, **dadurch gekennzeichnet, dass** der Stützschaft (5) entlang seiner sich von der Bodenplatte (4) weggerichteten Erstreckung in einem an die Bodenplatte (4) grenzenden Abschnitt eine erste Breite (8) und in einem sich daran anschließenden Abschnitt eine zweite, geringere Breite (9) aufweist.

3. Bodenstütze nach Anspruch 1 oder 2, **dadurch gekennzeichnet, dass** an zumindest eine der Stützschafterstreckung folgende Seite jeder Seitenwand (6, 7) ein von der Seitenwand (6, 7) abragender Stabilisierungsschenkel (11, 12) angeformt ist.

4. Bodenstütze nach Anspruch 3, **dadurch gekennzeichnet, dass** die Stabilisierungsschenkel (11, 12) der Seitenwände (6, 7) gegenüberliegend zueinander weisend ausgerichtet sind und mit ihren Stirnseiten insbesondere kammartig ineinander greifen.

5. Bodenstütze nach einem der Ansprüche 1 bis 4, **dadurch gekennzeichnet, dass** quer zu den Seitenwänden (6, 7) an den Enden der Bodenplatte (4) sich zwischen den Seitenwänden (6, 7) erstreckende Stützschenkel (14, 14.1) angeformt sind, an denen die Seitenwände (6, 7) kontaktierend abgestützt sind.

6. Bodenstütze nach einem der Ansprüche 1 bis 5, **dadurch gekennzeichnet, dass** in den Stützschaft (5) zumindest ein Gewinde (19) zur Montage von Installationsmaterial, etwa einer Rohrklemme (16), eingebracht ist.

7. Bodenstütze nach einem der Ansprüche 1 bis 6, **dadurch gekennzeichnet, dass** zur Befestigung des Oberteils (3) an dem Unterteil (2) durch den Stützschaft (5) eine Aufnahme (18) ausgebildet ist, in die das Oberteil (3) einsetzbar ist und dass die Aufnahme (18) über zumindest eine Raststruktur (19) verfügt, die in eine korrespondierende Raststruktur (20) in dem Oberteil (3) formschlüssig eingreift.

8. Bodenstütze nach Anspruch 7, **dadurch gekennzeichnet, dass** der mit den in Eingriff gestellten Raststrukturen (19, 20) gebildete Formschluss in Gewichtskraftrichtung (G) wirkt.

9. Bodenstütze nach einem der Ansprüche 1 bis 8, **dadurch gekennzeichnet, dass** das Oberteil (3) mit dem Unterteil (2) mittels zumindest einer seine Seitenwand (6, 7) durchdringenden Sicherungselement, insbesondere als Schraubenverbindung (21) gesichert ist.

10. Bodenstütze nach einem der Ansprüche 1 bis 9, **dadurch gekennzeichnet, dass** das Oberteil (3) in seinem Querschnitt C-förmig profiliert ist und dieses Profil einen Rücken (23) und zwei daran angeformte Schenkel (24, 25), die jeweils über Schenkelfortsätze (26, 27) verfügen, umfasst.

11. Bodenstütze nach einem der Ansprüche 1 bis 11, **dadurch gekennzeichnet, dass** das Unterteil (2) und/oder das Oberteil (3) ein aus einer Blechplatine hergestelltes Stanzbiegeteil sind.

12. Bodenstütze nach einem der Ansprüche 1 bis 11, **dadurch gekennzeichnet, dass** das Unterteil (2) und/oder das Oberteil (3) aus vorbeschichtetem oder korrosionsbeständigem Material bereitgestellt ist.

13. Bodenstütze nach einem der Ansprüche 10 bis 12, **dadurch gekennzeichnet, dass** an dem Oberteil (3) eine Befestigungsapplikation (28) angeschlossen ist, welche Befestigungsapplikation (28) durch zwei voneinander beabstandete, mit ihren flächigen Erstreckungen zueinander weisenden, durch zumindest einen Steg (31, 31.1) miteinander verbundene Klemmplatten (29, 30) gebildet ist, wobei in eine erste Klemmplatte (29) ein Gewindedurchzug (40) und in die zweite Klemmplatte (30) ein mit dem Gewindedurchzug (40) der ersten Klemmplatte (29) fluchtende Durchbrechung (39) eingebracht ist, und wobei die Klemmplatten (29, 30) einen solchen Abstand (32) zueinander aufweisen, dass zwischen ihnen die gegenüberliegenden Schenkelfortsätze (26, 27) der Schenkel (24, 25) des Oberteils (3) angeordnet sind und die erste Klemmplatte (29) bereichsweise zumindest einen Schenkelfortsatz (26, 27) hintergreift, während die zweite Klemmplatte (30) auf der anderen Seite dieses zumindest einen Schenkelfortsatzes (26, 27) angeordnet ist, sodass durch eine die Klemmplatten (29, 30) Schraube die Befestigungsapplikation (28) an den Schenkelfortsätzen (26, 27) des Oberteils (3) verklemmt wird.

14. Bodenstütze nach Anspruch 13, **dadurch gekennzeichnet, dass** zumindest zwei einander diagonal gegenüberliegenden Ecken (37, 38) der ersten Klemmplatte (29) als Schräge oder als Radius ausgestaltet sind, sodass beim Aufschieben der ersten Klemmplatte (29) auf die Schenkelfortsätze (26, 27) deren Kanten gegenüber der Erstreckung der Kante des Schenkelfortsatzes (26, 27) unter einem Winkel angestellt sind.

15. Bodenstütze nach einem der Ansprüche 1 bis 14, **dadurch gekennzeichnet, dass** in dem Oberteil (3) zumindest ein Gewinde (22) zur Montage etwa eines Kabelträgers eingebracht ist.

16. Kabeltragsystem, umfassend eine Bodenstütze nach Anspruch 15 und einen Kabelträger, **dadurch gekennzeichnet, dass** der Kabelträger seiner Längserstreckung folgend eine Abfolge an Langlöchern aufweist und das zumindest eine Gewinde des Oberteils dazu korrespondierend angeordnet ist und der Kabelträger mittels einer ein Langloch des Kabelträgers durchgreifenden Schraube an dem Oberteil befestigt ist.

## Claims

1. A multi-part support device (1) of a cable carrying system with a bottom part (2) to be mounted on the floor and providing a support shaft (5), and with a top part (3) mounted on one end of the support shaft (5) with fastening means (19, 20, 21) as an assembly base for one or more further parts of the cable carrying system, for example a cover piece, in particular of a cable carrier, **characterized in that** the bottom part (2) is substantially U-shaped, comprising a base plate (4) to be mounted on the floor and two opposite side walls (6, 7) molded onto the base plate (4) and forming the support shaft (5) and wherein the longitudinal extension of the base plate (4) follows the longitudinal direction of the upper part (3).

2. The support device of claim 1, **characterized in that** the shaft (5), along its extension directed away from the base plate (4), has a first width (8) in a section adjoining the base plate (4) and a second, smaller width (9) in an adjoining section.

3. The support device of claim 1 or 2, **characterized in that** a stabilizing leg (11, 12) projecting from the side wall (6, 7) is molded onto at least one of the supporting extensions of each side wall (6, 7).

4. The support device according to claim 3, **characterized in that** the stabilizing legs (11, 12) of the side walls (6, 7) are aligned so that they face each other and engage with each other in particular by their front sides in a comb-like manner.

5. The support device of any one of claims 1 to 4, **characterized in that** supporting legs (14, 14.1) pointing upward and extending between the side walls (6, 7) are molded onto the ends of the base plate (4) and transversely to the side walls (6, 7), the side walls (6, 7) being supported in contact on said legs.

6. The support device of any one of claims 1 to 5, **characterized in that** at least one thread (19) for mounting installation material, such as a pipe clamp (16), is introduced into the support shaft (5).

7. The support device of any one of claims 1 to 6, **characterized in that** for fastening the top part (3) to the bottom part (2) by the support shaft (5), a receptacle (18) is formed into which the top part (3) can be inserted, and **in that** the receptacle (18) has at least one snap-in structure (19) which positively engages in a corresponding snap-in structure (20) in the top part (3).

8. The support device of claim 7, **characterized in that** the positive connection formed with the engaged snap-in structures (19, 20) acts in the direction of weight force (G).

9. The support device of any one of claims 1 to 8, **characterized in that** the top part (3) is secured to the bottom part (2) by means of at least one securing element penetrating its side wall (6, 7), in particular as a screw connection (21).

10. The support device of any one of claims 1 to 9, **characterized in that** the top part (3) is profiled in a C-shape in its cross-section and this profile comprises a back (23) and two legs (24, 25) molded thereupon, each of which has leg extensions (26, 27).

11. The support device of any one of claims 1 to 11, **characterized in that** the bottom part (2) and/or the top part (3) are a stamped and bent part made from a sheet metal blank.

12. The support device of any one of claims 1 to 11, **characterized in that** the bottom part (2) and/or the top part (3) are provided from precoated or corrosion-resistant material.

13. Support device of any one of claims 10 to 12, **characterized in that** a fastening application (28) is connected to the top part (3), said fastening application (28) being formed by two clamping plates (29, 30) which are spaced apart from one another, with their flat extensions facing one another and connected to one another by at least one web (31, 31.1), wherein a threaded hole (40) is introduced into a first clamping plate (29), and an opening (39) aligned with the threaded hole (40) of the first clamping plate (29) is introduced into the second clamping plate (30), and wherein the clamping plates (29, 30) have such a distance (32) from one another that the opposite leg extensions (26, 27) of the legs (24, 25) of the top part (3) are arranged between them and the first clamping plate (29) has at least one leg extension in some areas (26, 27), while the second clamping plate (30) is arranged on the other side of this at least one leg extension (26, 27), so that the fastening application (28) is clamped to the leg extensions (26, 27) of the top part (3) by a screw on the clamping plates (29, 30).

14. Support device of claim 13, **characterized in that** at least two diagonally opposite corners (37, 38) of the first clamping plate (29) are configured as a slope or as a radius, so that when the first clamping plate (29) is pushed onto the leg extensions (26, 27), its edges are set at an angle with respect to the extension of the edge of the leg extension (26, 27).

15. The support device of any one of claims 1 to 14, **characterized in that** at least one thread (22) is introduced in the top part (3), in particular in its upward-pointing section, to mount for instance a cable carrier.

16. A cable carrying system, comprising a support device according to claim 15 and a cable carrier, **characterized in that** the cable carrier has a succession of elongated holes along its length and the at least one thread of the top part is arranged correspondingly thereto, and the cable carrier is attached to the top part by means of a screw that passes through an elongated hole in the cable carrier.

## Revendications

1. Support plancher multipartite (1) d'un système de support de câble, comportant une partie inférieure (2) à monter du côté du sol et mettant à disposition une tige de support (5), ainsi qu'une partie supérieure (3), réalisée à la manière d'une traverse, montée à une extrémité de la tige de support (5) au moyen d'éléments de fixation (19, 20, 21), en tant que base de montage pour une ou plusieurs autres pièces du système de support de câble, par exemple une longueur de fermeture, en particulier un support de câble, dans lequel les éléments de fixation (19, 20, 21) sont une liaison vissée et/ou une liaison à encliquetage, **caractérisé en ce que** la partie inférieure (2) est configurée essentiellement en forme de U, comprenant une plaque de base (4) à monter côté sol et deux parois latérales (6, 7) opposées, formées d'un seul tenant avec la plaque de base (4) et constituant la tige de support (5), et dans lequel l'extension longitudinale de la plaque de base (4) suit la direction d'extension longitudinale de la partie supérieure (3).

2. Support plancher selon la revendication 1, **caractérisé en ce que** la tige de support (5) présente, le long de son extension s'éloignant de la plaque de base (4), dans une section adjacente à la plaque de base (4), une première largeur (8) et, dans une section s'y raccordant, une seconde largeur (9) plus réduite.

3. Support plancher selon la revendication 1 ou 2, **caractérisé en ce que**, à au moins l'un des côtés de chaque paroi latérale (6, 7) suivant l'extension de tige de support, un bras de stabilisation (11, 12) faisant saillie à partir de la paroi latérale (6, 7) est formé d'un seul tenant.

4. Support plancher selon la revendication 3, **caractérisé en ce que** les bras de stabilisation (11, 12) des parois latérales (6, 7) sont orientés l'un vers l'autre en position opposée et s'emboîtent mutuellement par leurs faces frontales, en particulier en forme de peigne.

5. Support plancher selon l'une des revendications 1 à 4, **caractérisé en ce que**, aux extrémités de la plaque de base (4), perpendiculairement aux parois latérales (6, 7), des bras de support (14, 14.1) s'étendant entre les parois latérales (6, 7) sont formés d'un seul tenant, sur lesquels les parois latérales (6, 7) sont en appui en contact.

6. Support plancher selon l'une des revendications 1 à 5, **caractérisé en ce qu'**au moins un filetage (19) est ménagé dans la tige de support (5) pour le montage de matériel d'installation, par exemple un collier de serrage de tube (16).

7. Support plancher selon l'une des revendications 1 à 6, **caractérisé en ce que**, pour la fixation de la partie supérieure (3) sur la partie inférieure (2), une cavité de réception (18) est formée à travers la tige de support (5), cavité dans laquelle la partie supérieure (3) peut être insérée, et **en ce que** la cavité de réception (18) dispose au moins d'une structure d'encliquetage (19) venant en prise par complémentarité de forme dans une structure d'encliquetage correspondante (20) dans la partie supérieure (3).

8. Support plancher selon la revendication 7, **caractérisé en ce que** la complémentarité de forme constituée avec les structures d'encliquetage (19, 20) mises en prise agit dans la direction de force de poids (G).

9. Support plancher selon l'une des revendications 1 à 8, **caractérisé en ce que** la partie supérieure (3) est sécurisée par rapport à la partie inférieure (2) au moyen d'au moins un élément de sécurité traversant sa paroi latérale (6, 7), en particulier sous la forme d'une liaison vissée (21).

10. Support de sol selon l'une des revendications 1 à 9, **caractérisé en ce que** la partie supérieure (3) est profilée en section transversale en forme de C et **en ce que** ce profil comprend un dos (23) et deux branches (24, 25) formées d'un seul tenant avec celui-ci, lesquelles disposent chacune de prolongements de branche (26, 27).

11. Support plancher selon l'une des revendications 1 à 11, **caractérisé en ce que** la partie inférieure (2) et/ou la partie supérieure (3) sont constituées d'une pièce de découpage et de pliage réalisée à partir d'une tôle plane.

12. Support plancher selon l'une des revendications 1 à 11, **caractérisé en ce que** la partie inférieure (2) et/ou la partie supérieure (3) est réalisée en matériau prérevêtu ou en matériau résistant à la corrosion.

13. Support plancher selon l'une des revendications 10 à 12, **caractérisé en ce que**, au niveau de la partie supérieure (3), une application de fixation (28) est raccordée, laquelle application de fixation (28) est constituée de deux plaques de serrage (29, 30) espacées l'une de l'autre, dont les extensions planes sont orientées l'une vers l'autre et qui sont reliées entre elles par au moins une entretoise (31, 31.1), dans lequel une première plaque de serrage (29) comporte un passage fileté (40) et la seconde plaque de serrage (30) comporte une ouverture (39) alignée avec le passage fileté (40) de la première plaque de serrage (29), et dans lequel les plaques de serrage (29, 30) présentent un écartement (32) tel que les prolongements de branches (26, 27) opposés des branches (24, 25) de la partie supérieure (3) sont disposés entre elles, et la première plaque de serrage (29) recouvre par endroits au moins un prolongement de branche (26, 27), tandis que la seconde plaque de serrage (30) est disposée de l'autre côté dudit au moins un prolongement de branche (26, 27), de sorte que, par l'intermédiaire d'une vis traversant les plaques de serrage (29, 30), l'application de fixation (28) est serrée sur les prolongements de branches (26, 27) de la partie supérieure (3).

14. Support plancher selon la revendication 13, **caractérisé en ce qu'**au moins deux coins (37, 38) diagonalement opposés de la première plaque de serrage (29) sont configurés en chanfrein ou en arrondi, de sorte que, lors du coulissement de la première plaque de serrage (29) sur les prolongements de branche (26, 27), leurs arêtes sont disposées sous un angle par rapport à l'extension de l'arête du prolongement de branche (26, 27).

15. Support plancher selon l'une des revendications 1 à 14, **caractérisé en ce qu'**au moins un filetage (22) est ménagé dans la partie supérieure (3) pour le montage, par exemple, d'un support de câble.

16. Système de support de câbles, comprenant un support plancher selon la revendication 15 et un support de câble, **caractérisé en ce que** le support de câble présente, selon son extension longitudinale, une succession de trous oblongs, et **en ce que** l'au moins un filetage de la partie supérieure est disposé de manière correspondante, et **en ce que** le support de câble est fixé à la partie supérieure au moyen d'une vis traversant un trou oblong du support de câble.
